# EUROPÄISCHE PATENTANMELDUNG

(11) **EP 0 792 923 A1**
(43) Veröffentlichungstag der Anmeldung: **03.09.1997**
(21) Anmeldenummer: 97250038.3
(22) Anmeldetag: 21.02.1997
(51) Int. Cl.: C09D 5/28, C04B 26/28, C09D 101/02

(54) **Spritzfähiges Beschichtungsmittel**

(30) Priorität: 02.03.1996 DE 29604493 U; 05.12.1996 DE 29621864 U
(71) Anmelder: Bednarski, Uwe, 12349 Berlin (DE)
(72) Erfinder: Bednarski, Uwe, 12349 Berlin (DE)
(74) Vertreter: Specht, Volker

(57) **Zusammenfassung**

Ein spritzfähiges Beschichtungsmittel zur oberflächenstrukturierten Wand- und Deckenverkleidung im Innenbereich ist durch ein pastös eingestelltes Gemisch aus Cellulosefasern und Wasser sowie Binde- und Farbmitteln gekennzeichnet, das zur Variation der zu erzielenden Oberflächenstruktur bei in bestimmten Grenzen variabler Pastosität und Fördermenge sowie variablem Spritz- oder Luftdruck auf die zu beschichtende Fläche auftragbar ist. Als Bindemittel wird vorzugsweise ein Härtungsmittel verwendet. Die Oberflächenstruktur wird durch Materialanhäufungen und/oder eingeschlossene Luftblasen und/oder zerplatzte Luftblasen gebildet. Das Beschichtungsmittel kann bei geringen Temperaturen auf noch feuchte Untergründe aufgetragen werden und ist mit Wasser und/oder mechanischen Mitteln ablösbar und ökologisch abbaubar.

## Beschreibung

Die Erfindung betrifft ein spritzfähiges Beschichtungsmittel zur oberflächenstrukturierten Wand- und Deckenverkleidung im Innenbereich.

Zur Beschichtung und dekorativen Gestaltung der Oberflächen von Decken und Wänden in Innenräumen werden bekanntermaßen verschiedene plastische Beschichtungsmassen in einer mehr oder weniger dicken Schicht auf die entsprechenden Flächen aufgebracht, um anschließend mit den verschiedensten Werkzeugen bestimmte Oberflächeneffekte und -strukturen zu erzeugen. Aufgrund der relativ dicken, pastösen Auftragsschicht ist es jedoch schwierig, die Standfestigkeit sowohl der aufgetragenen Masse an der Wand oder Decke als auch der in der Masse erzeugten Oberflächenstruktur bis zur Verfestigung, und zwar ohne Abrutschen von der beschichteten Fläche und ohne Rißbildung, zu gewährleisten.

Es ist weiterhin bekannt, die im Rohbauzustand befindlichen Wände und Decken mit einem dünnschichtigen Rauhfaserputz oder ähnlichen Beschichtungsmitteln auf Kunststoffbasis zu verkleiden oder mit Rauhfasertapete zu bekleben, um lediglich in einer dünnen Schicht eine putzartige Wand- und Deckengestaltung zu erzielen.

Das Aufbringen von Rauhfaserputz ist jedoch insofern aufwendig, als zuvor sämtliche - auch kleinen - Risse und sonstige Vertiefungen in der zu behandelnden Fläche, da es ansonsten zu Rißbildungen in dem Beschichtungsbelag kommt, durch Spachteln zu verschließen sind bzw. bei der ohnehin sehr aufwendigen Verarbeitung von Rauhfasertapete eine vorherige Grundierung erforderlich ist. Außerdem ist die durch Rauhfaserspritzen erzeugte Wand- und Deckenverkleidung nur mit erheblichem maschinellem Aufwand wieder entfernbar, und eine gleichmäßige Oberflächenstrukturierung ist nur schwierig und unter ständigem intensivem Rühren des aufzutragenden Materials erreichbar.

Bei mit Rauhfasertapeten beschichteten Wänden und Decken ist hingegen oftmals eine einheitliche Oberflächengestaltung aufgrund der zwischen den Tapetenbahnen verbleibenden Fugen nicht ohne weiteres erreichbar. Zudem lassen sich unterschiedliche Strukturen bzw. Körnungen nur mit verschiedenen Tapeten- bzw. Rauhfaserputzsorten erzielen. Ein weiterer Nachteil der bekannten Beschichtungsmittel besteht außerdem darin, daß deren Aufbringen auf Wände und Decken mit einer bestimmten Restfeuchte nicht möglich ist, sondern ein vorheriges zeit- oder arbeits- und energieaufwendiges Trocknen erforderlich ist.

Der Erfindung liegt daher die Aufgabe zugrunde, ein Beschichtungsmittel zur dünnschichtigen oberflächenstrukturierten Wand- und Deckenverkleidung zu entwickeln, daß mit geringem Arbeits- und Materialaufwand auf unvorbereitete und noch feuchte Flächen aufgebracht werden kann und eine deutlich ausgeprägte, gleichmäßige und in der Körnung variable, dekorative Oberflächenausbildung bewirkt.

Erfindungsgemäß wird die Aufgabe mit einem durch Spritzen auftragbaren Beschichtungsmittel gelöst, daß durch ein pastös oder plastisch eingestelltes Gemisch aus Cellulosefasern und Wasser sowie Binde- und Farbmitteln gekennzeichnet ist, das zur Variation der zu erzielenden Oberflächenstruktur bei in bestimmten Grenzen variabler Pastosität und Fördermenge sowie variablem Spritz- oder Luftdruck auf die zu beschichtende Fläche auftragbar ist.

Der Grundgedanke der Erfindung besteht mit anderen Worten darin, daß ein derartiges, aufgrund seines Anteils an natürlichen Cellulosefasern in einem bestimmten Bereich pastös oder breiig eingestelltes, faseriges Gemisch unter Anwendung von Luftdruck auf die zu behandelnde und gegebenenfalls noch feuchte Fläche aufgespritzt wird. Kleine Löcher und Risse werden spätestens im zweiten Spritzvorgang mit einer dünnen und faserigen bzw. gewebeartigen und daher dehnbaren Schicht vollflächig abgedeckt.

In der pastösen Masse vorhandene größere Lufteinschlüsse zerplatzen an der Oberfläche und bilden gemeinsam mit Materialanhäufungen und eingeschlossenen Luftblasen - ohne Körnungsmittel, wie Sägespäne, Quarzsande und dergleichen - eine gleichmäßig strukturierte, dekorative Fläche. In der aufgetragenen Schicht verbleibende, durch die eingeschlossenen Luftblasen gebildete kleinere Hohlräume erhöhen die "Atmungsaktivität" des so ausgebildeten Wand- und Deckenbelages. Der auf diese Weise insgesamt erzielbare hohe Grad der Durchlaßfähigkeit der Auftragsschicht ermöglicht es, das erfindungsgemäße Beschichtungsmittel auch auf Wand- und Deckenflächen mit einer Restfeuchte von bis zu 40% aufzutragen, da die Feuchtigkeit auch anschließend durch die aufgetragene Schicht diffundieren und die Wand somit nachträglich schnell abtrocknen kann. Damit werden vor dem Auftragen des Beschichtungsmittels keine Wartezeiten oder sonstige Aufwendungen für das Trocknen der zu beschichtenden Flächen erforderlich. Auch der Aufwand für andere Vorbereitungsmaßnahmen zum Verschließen von Rissen und Löchern entfällt. Durch die hohe Elastizität und Durchlaßfähigkeit des aufgetragenen Beschichtungsmittels sind auch nachträgliche Spannungsrißbildungen in dem Belag ausgeschlossen. Das Auftragen des Beschichtungsmittels kann schon bei Temperaturen von 5°C und sogar darunter erfolgen. Abgesehen von der erzielbaren unterschiedlichen Oberflächenstruktur kann das erfindungsgemäße Beschichtungsmittel zum Ausgleich von Unebenheiten auch in großer Schichtdicke aufgetragen werden, ohne daß es von der Wand oder Decke abfällt.

Nach einem weiteren Merkmal der Erfindung wird als Bindemittel ein Härtungsmittel, vorzugsweise ein für die Vorbehandlung von Decken und Wänden verwendbares Grundierungsmittel verwendet. Durch die Beimengung von Härtungsmittel zugunsten eines verringerten Wasseranteils wird die Austrocknungszeit der Beschichtung nochmal wesentlich verringert. Außerdem wird mit dem Härtungsmittel für die in der Beschichtung enthaltene Farbe zu der betreffenden Wand- und Deckenfläche gleichsam eine Sperrschicht gebildet, die ein Absorbieren von Farbanteilen in das unbehandelte Wand- oder Deckenmaterial und damit eine Farbschwächung des aufgetragenen Beschichtungsmittels verhindert. Schließlich bewirkt das Härtungsmittel auch eine bestimmte Konsistens des Beschichtungsmittels und eine Konglomeration seiner Bestandteile beim Aufspritzen, die sich in einer gleichmäßigen, deutlich sichtbar ausgeprägten Körnung widerspiegelt, deren Größe von dem jeweiligen Spritzdruck, der Fördermenge des Spritzgutes und der aufgrund der gewählten Zusammensetzung des Beschichtungsmittels erzielten Konsistenz abhängt. Durch die Verwendung von Härtungsmittel als Bindemittel wird die Verarbeitbarkeit des Beschichtungsmittels, zum Beispiel die Haftung an der behandelten Fläche, weiter verbessert.

Nach einem weiteren Merkmal der Erfindung enthält die dem Beschichtungsmittel beigemengte Farbe einen Kunststoffanteil. Ein weiterer Vorteil der Erfindung besteht aber darin, daß das Beschichtungsmittel trotz seines Kunststoffanteils - im Gegensatz zu anderen bekannten Beschichtungsmitteln auf Kunststoffbasis - mit Wasser und/oder mechanischen Mitteln auf einfache Weise von der beschichteten Fläche abgelöst und ökologisch entsorgt werden kann.

In weiterer Ausbildung der Erfindung beträgt der Anteil an Cellulosefasern mindestens 23 Volumenprozent und soll 77 Volumenprozent nicht überschreiten, während Härtungsmittel sowie Wasser und/oder Farbe in dem verbleibenden Volumenanteil jeweils zu gleichen Teilen enthalten sind. Vorzugsweise liegt der Cellulosefaseranteil zwischen 52 und 55 Volumenprozent. Des weiteren kann der Wasseranteil bei entsprechend verändertem Farbanteil erhöht oder verringert werden.

Nach einem weiteren Merkmal der Erfindung liegt der Anteil an natürlichen Cellulosefasern in der Überzugsschicht etwa zwischen 13 und 16%, während der Wasseranteil etwa zwischen 57 und 69 % liegt. Binde- und Farbmittel werden in einer Größenordnung von 1 bis 2% bzw. 16 bis 27% zugemischt. In diesem Fall werden nicht auf Kunststoffbasis gebildete Farb- und Bindemittel eingesetzt. Als Bindemittel wird vorzugsweise ein Naturleim, insbesondere ein Kleber auf Cellulosebasis, verwendet.

Nach einem weiteren Merkmal der Erfindung ist das zum Auftragen durch Spritzen vorgesehene Beschichtungsmittel, das heißt auch in der zum Spritzen vorgesehenen Konsistenz, als Spachtelmasse zum Ausgleichen von Unebenheiten an Wänden und Decken verwendbar. Diese Spachtelmasse verfügt auch in ausgehärtetem Zustand über eine hohe Elastizität und kann in einer Schichtdicke von etwa einem Zentimeter oder mehr aufgetragen werden.

Durch Änderung der Zusammensetzung kann nicht nur auf die Konsistenz (Pastosität) des aufzutragenden Beschichtungsmittels und damit auf die Oberflächenstruktur, sondern auch auf die Elastizität der Überzugsschicht Einfluß genommen werden. Gleichzeitig wird die Strukturierung ("Körnung") der Oberfläche jedoch auch durch die Fördermenge pro Zeiteinheit und den Luftdruck, mit dem das Beschichtungsmittel auf die Wand- und Deckenflächen aufgetragen wird, bestimmt. Es ist somit mit ein und demselben Beschichtungsmittel eine optisch unterschiedliche Wand- und Deckengestaltung in hoher Stabilität und Elastizität erreichbar.

Weitere Merkmale und vorteilhafte Weiterbildungen der Erfindung sind in den Unteransprüchen angegeben.

Im folgenden wird ein Ausführungsbeispiel der Erfindung näher erläutert.

In einer ersten Ausführungsvariante werden in einer Menge von jeweils 10 Litern Wasser, Farbe und Härtungsmittel zu gleichen Teilen, das heißt mit einem Anteil von jeweils 15,4 Volumenprozent an der Gesamtmenge, mit 35 Litern Cellulosefasern, das heißt einem Anteil von 53,8 Volumenprozent, zu einer steifen, breiig-pastösen Masse vermischt. Diese Masse wird mit einem Spritzgerät, wie es üblicherweise zum Auftragen von herkömmlichen Putzen verwendet wird, unter Verwendung von Druckluft auf die zu beschichtende Wand- und/oder Deckenfläche aufgetragen, wobei die gewünschte Oberflächenstruktur durch den jeweils eingestellten Spritzdruck und die Fördergeschwindigkeit beeinflußt wird.

Unter hoher Druckeinwirkung wird eine sehr feinkörnig strukturierte Oberfläche erzielt. In diesem Fall ist es erforderlich, auch kleinere Löcher und Risse in der zu beschichtenden Fläche zuvor durch Spachteln zu verschliessen, und zwar vorzugsweise mit dem zum Spritzen verwendeten Beschichtungsmittel, das in der gleichen Zusammensetzung und Konsistenz auch als Spachtelmasse eingesetzt wird. Das Beschichten wird bei sehr feinkörniger Oberflächenstruktur in ein bis zwei Arbeitsgängen ausgeführt. Die Beschichtung trocknet in kurzer Zeit ohne Rißbildung aus. Die Körnung ist gleichmäßig verteilt und stabil, jedoch kann die Beschichtung mit Wasser und mechanischen Mitteln wieder vollständig entfernt werden.

Gröbere Strukturen können mit der gleichen, oben angegebenen Zusammensetzung und Konsistenz, jedoch bei verringerter Druckluftzufuhr und Fördergeschwindigkeit, erreicht werden. In je gröberer Körnung das Beschichtungsmittel bei geringem Spritzdruck aufgetragen wird, umso eher gelingt es, selbst größere Löcher und Risse in der zu beschichtenden Fläche so abzudecken, daß diese ohne vorhergehendes Spachteln nach dem Auftragen des Beschichtungsmittels nicht mehr erkennbar sind. Das heißt, mit einer rauhputzartigen Struktur der Beschichtungsfläche kann das aufwendige manuelle Zuspachteln von kleinen Rissen und Löchern entfallen.

Entsprechend der Höhe des Spritzdrucks wird das aus der Spritzdüse austretende Beschichtungsmittel mehr oder weniger stark verteilt, und die Spritzdüse verlassen bei hohem Druck viele kleine Partikel, während bei geringem Druck größere zusammenhängende Beschichtungsmittelzusammenballungen austreten, die ihre Größe und ihren Zusammenhalt aufgrund der Pastosität der Beschichtungsmasse und der Bindung zwischen den Cellulosefasern und den anderen Bestandteilen auch an der Beschichtungsfläche beibehalten. Dadurch ist es möglich, eine ausgeprägte, deutlich sichtbare Strukturierung zu erzielen und mit einer entsprechend großen Körnung kleinere Risse und Löcher in der Wand- und Deckenfläche ohne Vorbehandlung zu schließen.

Auch eine so hergestellte rauhputzartige, grobkörnige Beschichtung ist nach kurzer Zeit getrocknet und zeichnet sich durch eine hohe Farbbeständigkeit aus, da das Härtungsmittel nicht nur der Bindung der Fasern zu zusammenhängenden Konglomeraten und der Verringerung der Austrocknungszeit dient, sondern gleichzeitig ein Sperrmedium zwischen dem Farbanteil und dem beschichteten Wand- und Deckenmaterial bildet, so daß die Farbpigmente in dem Beschichtungsmittel gebunden sind. Die Farbgebung des Beschichtungsmittels kann im übrigen durch Zusatz von Glimmer, Buntstein und dgl. zur Erzielung vielfältiger Gestaltungseffekte weiter variiert werden.

Gegenüber den üblicherweise angewendeten Wand- und Deckenbeschichtungsverfahren ist der Arbeits- und Zeitaufwand wesentlich geringer, wobei mit dem erfindungsgemäßen Beschichtungsmittel gleichzeitig eine qualitativ hochwertigere - gleichmäßigere und stärker sowie variabel strukturierte, rauhputzartige - Oberfläche erreicht werden kann und die Strukturierung auch bei mehrfachem Überstreichen über einen langen Zeitraum erhalten bleibt.

In zwei weiteren Ausführungsvarianten wurden - bei einem Mischungsverhältnis von jeweils 2 : 1 : 1 - 30 Liter Cellulosefasern mit 15 Litern Farbe und 15 Litern Grundierungsmittel bzw. 15 Litern Wasser und 15 Litern Grundierungsmittel gemischt, wobei gleichermaßen gute Beschichtungsergebnisse wie in der oben erläuterten Ausführungsvariante erreicht wurden.

In einer weiteren Ausführungsvariante wird ein Gemisch aus natürlichen, aus Holz oder anderen Faserpflanzen gewonnenen Cellulosefasern mit einem Anteil von 14% an der Gesamtmenge mit Naturleim in einem Anteil von 2% sowie ökologisch abbaubarer Farbe mit einem Anteil von 20% unter Zugabe von Wasser in dem verbleibenden Anteil von 64 % zu einer Masse mit leicht pastöser, breiiger Konsistenz verrührt, in einen Förderbehälter eingebracht und anschließend mit einer Spritzpistole mit Hilfe von Druckluft auf die zu beschichtende Wand oder Decke aufgetragen. An der Wand- und Deckenfläche wurden zuvor lediglich breite Fugen - vorzugsweise mit dem gleichen pastösen Mittel - durch Spachteln geschlossen.

Nach Maßgabe der gewünschten Strukturierung - fein, mittel oder grob - wird über den Luftdruck und die Fördermenge des aufzutragenden Beschichtungsmittels eine rauhputzartige Oberflächenausbildung mit einheitlicher, nicht scharfkantiger "Körnung" erzielt. Entsprechend dem Zustand beispielsweise einer zu beschichtenden Betonfläche im Hinblick auf Löcher und Risse sind maximal zwei Spritzarbeitsgänge zur Erzielung einer Unebenheiten schließenden, gleichmäßigen Wand- und Deckenverkleidung erforderlich. Das Auftragen des Beschichtungsmittels erfolgt auf rohbaufertige Wand- und Deckenflächen, die eine Restfeuchte von 40% aufweisen, d.h. eine vorhergehende Trocknung wird nicht vorgenommen.

Dieser Überzug haftet auf allen nichtmetallischen Oberflächen und ist mit anderen Farben überstreichbar. Andererseits ist ein Ablösen mit Wasser oder einfachen mechanischen Mitteln (Spachtel) ohne weiteres möglich. Das abgelöste Überzugsmittel kann auf einfache Weise wie Papier entsorgt werden. Letztlich wird ein mit geringem Aufwand verarbeitbares, kostengünstiges und auch ökologisch vorteilhaftes Beschichtungsmittel zur Verfügung gestellt, das eine dekorative und variable Verkleidung von Decken und Wänden im Innenbereich ermöglicht.

## Patentansprüche

1. Spritzfähiges Beschichtungsmittel zur oberflächenstrukturierten Wand- und Deckenverkleidung im Innenbereich, gekennzeichnet durch ein pastös oder plastisch eingestelltes Gemisch aus Cellulosfasern und Wasser sowie Binde- und Farbmitteln, das zur Variation der zu erzielenden "körnigen" Oberflächenstruktur bei in bestimmten Grenzen variabler Pastosität und Fördermenge und variablem Spritz- oder Luftdruck auf die zu beschichtende Fläche auftragbar ist.

2. Beschichtungsmittel nach Anspruch 1, dadurch gekennzeichnet, daß das Bindemittel ein Härtungsmittel ist.

3. Beschichtungsmittel nach Anspruch 2, dadurch gekennzeichnet, daß das Härtungsmittel ein für die Vorbehandlung von Wänden und Decken verwendbares Grundierungsmittel ist.

4. Beschichtungsmittel nach einem der Ansprüche 1 bis 3, dadurch gekennzeichnet, daß das Farbmittel einen Kunststoffanteil enthält.

5. Beschichtungsmittel nach einem der Ansprüche 1 bis 4, gekennzeichnet durch einen die jeweils gewünschte Pastosität einstellenden Celluloseanteil zwischen 23 und 77 Volumenprozent sowie einen zu jeweils gleichen Teilen enthaltenen Anteil an Wasser, Härtungsmittel und Farbe.

6. Beschichtungsmittel nach Anspruch 5, dadurch gekennzeichnet, daß der Anteil an Cellulosefasern zwischen 52 und 55 Volumenprozent liegt.

7. Beschichtungsmittel nach Anspruch 5, dadurch gekennzeichnet, daß der Wasseranteil mit Bezug auf einen erhöhten oder verringerten Farbanteil verringert bzw. erhöht ist oder der Farbanteil durch den Wasseranteil ersetzt wird und umgekehrt.

8. Beschichtungsmittel nach Anspruch 7, dadurch gekennzeichnet, daß sich der Anteil von Cellulosefasern zu Wasser zu Härtungsmittel oder von Cellulosefasern zu Farbmittel zu Härtungsmittel wie 2 : 1 : 1 verhält.

9. Beschichtungsmittel nach Anspruch 1, gekennzeichnet durch Anteile an Cellulosefasern von 13 bis 16%, an Wasser von 57 bis 69%, an Bindemittel von 1 bis 2% und an Farbmittel von 16 bis 27%.

10. Beschichtungsmittel nach Anspruch 9, dadurch gekennzeichnet, daß das Bindemittel ein Naturleim, vorzugsweise ein Kleber auf Cellulosebasis, ist.

11. Beschichtungsmittel nach einem der Ansprüche 1 bis 10, dadurch gekennzeichnet, daß die jeweilige Oberflächenstrukturierung durch die Größe der Materialanhäufungen sowie eingeschlossene und/oder geplatzte Luftblasen in Abhängigkeit von der jeweiligen Pastosität sowie dem Spritzdruck und der eingebrachten Luftmenge und der Fördermenge gebildet ist.

12. Beschichtungsmittel nach einem der Ansprüche 1 bis 11, dadurch gekennzeichnet, daß es mit Wasser und/oder mechanischen Mitteln von der Wand- oder Deckenfläche ablösbar ist.

13. Beschichtungsmittel nach einem der Ansprüche 1 bis 12, dadurch gekennzeichnet, daß es zum Ausgleich von Unebenheiten auf der zu beschichtenden Fläche als elastische Spachtelmasse anwendbar ist, die in großer Schichtdicke auftragbar ist.

14. Beschichtungsmittel nach einem der Ansprüche 1 bis 13, dadurch gekennzeichnet, daß es auf feuchte Untergründe auftragbar ist.
